# EUROPEAN PATENT SPECIFICATION

(11) **EP 1 856 211 B1**
(45) Date of publication and mention of the grant of the patent: **06.10.2010**
(21) Application number: 06709614.9
(22) Date of filing: 02.02.2006
(51) Int. Cl.: C09C 1/00, C09C 1/30, C09C 3/00

(54) **PRINTING PROCESS FOR PREPARING PARTICULATE PRODUCTS**
DRUCKVERFAHREN ZUR HERSTELLUNG TEILCHENFÖRMIGER PRODUKTE
PROCEDE D'IMPRESSION POUR FABRIQUER DES PRODUITS PARTICULAIRES

(30) Priority: 02.02.2005 GB 0502166
(43) Date of publication of application: 21.11.2007
(73) Proprietor: Dunwilco (1198) Limited, Edinburgh EH1 2EN (GB)
(72) Inventor: WHEELER, Ian, Robert, By Kinross KY13 9HD (GB)
(74) Representative: Benson, John Everett
(86) International application number: PCT/GB2006/000365
(87) International publication number: WO 2006/082415

(56) References cited:
- WO-A-03/068868
- US-A1- 2004 244 675
- US-A1- 2005 252 410

## Description

The present invention provides a process of preparing particulate products, in particular a process of preparing particulate products having a narrow particle size distribution. The particulate products prepared by the process find use in aesthetic and functional applications, especially as pigments.

Particulate products may have a variety of geometries, depending on the intended application. For example, in the pigments field, they may be substantially spherical, as in the surface polished products of EP0651777 or they may be flake shaped to better reflect light.

Commercially available flake particles are of two main types, metallic and non-metallic. They encompass a wide range of particle size, from 5µm to 1000µm or more in diameter, with aspect ratios (the ratio of the largest dimension to the smallest; effectively the diameter to thickness ratio) of 5:1 or above, for instance about 15:1 to around 150:1 or even up to 250:1 or more. Such particles find use for the coloration of inks, paints, plastics and powder coatings, to impart an appearance not attainable from non-flake, organic or inorganic pigments. Depending on their chemical composition, they may also have a number of functional applications, such as electrical conductivity, heat and light reflection, moisture barrier or flame retardancy.

For many applications, it is advantageous for the flake particles to be of uniform size, particularly when used as pigments. For example, in gravure printing applications, excessively large flakes may block the printing cells, thereby reducing the quality of print. In contrast, very small flakes can reduce the cleanliness of tone of coatings in which they are incorporated. Indeed, the brightest effects are generally derived from a narrow particle size distribution; that is to say, from a product incorporating neither very large, nor very small flakes.

The preparation of metal flake particles, for example for use as pigments, is well documented in the patent literature. They may be prepared from metal powder in the complete absence of solvent by a dry ball milling process, but this can be hazardous in the case of reactive metals such as aluminium, due to the contaminating and/or explosive properties of the dry flake products. For such metals, dry milling has been largely superseded by wet ball milling processes in which metal powder is milled with an organic liquid such as mineral spirits and a small amount of a lubricant. The cascading action of grinding media within the ball mill causes the substantially spherical metal powder to be flattened out into flakes having the recited aspect ratios.

Irrespective of the method of milling, the most common starting material is atomised metal powder. This is prepared by melting the bulk metal then forcing it through a nozzle by means of compressed gas. Thus bulk metal is converted to powder requiring further mechanical action in the ball mill to form flakes.

Older production processes produce flakes with angular edges and uneven surfaces, known in the art as "cornflakes". A more recent development relating to aluminium is so-called "silver dollar" flakes. These are distinguished by more rounded edges, smoother, flatter surfaces and a narrower particle size distribution. In consequence, they have a brighter, whiter and more desirable appearance.

Glitter flakes are another type of commercially available pigment. These are manufactured from very thin sheets of metal or surface metallised polymer film that are cut into regular geometric shapes by mechanical action. The drawback of this technique is that it is only able to make relatively large flakes, the minimum flake size being about 50µm.

A further process for producing metal flakes involves coating a release coated polymer film with metal using a vacuum deposition technique. The release coating is subsequently dissolved to release a metal film that is subsequently disintegrated into flakes.

The non-metal commercially available flake particles used as pigments include pearlescent or mica flakes. These are traditionally derived from naturally occurring deposits of plate-like, silicate minerals, although more modern forms may be synthesised.

Apart from glitter flakes, a characteristic shared by conventional metal and non-metal, in particular pearlescent flake particles, is their wide particle size distribution. The particle size distribution of typical conventional metal flake particles and pearlescent flake particles are shown in Table 1 and Table 2 respectively. In use as pigments, the coarser flakes provide a sparkling effect, but little hiding power (opacity). In contrast, the finer flakes contribute opacity, but are of darker appearance. In practice, flake pigment manufacturers strive to produce products with a narrower particle size distribution, as in so doing, the aesthetic effect is maximised.

Creation of a substantially monodisperse product is not possible using the above-described conventional methods of preparing the two classes of flake pigment.

The present invention overcomes the problems of the prior art.

### DISCLOSURE OF THE INVENTION

The present invention provides a process of preparing flake products, the process comprising the steps of (i) printing a liquid non-metal flake precursor onto or into a collecting substrate; (ii) subjecting the non-metal flake precursor to a solidification treatment to provide non-metal flakes; and (iii) recovering the non-metal flakes.

The process of the present invention can be used to provide non-metal flake products having a median particle diameter of 100 µm or less, preferably 30 µm or less and a particle size distribution such that at least 90% by weight of the flake products have a particle diameter within ±25% of the median particle diameter. The process of the present invention can also be used in the production of a pigment composition comprising non-metal flake products.

When the flake products are coated by a metal compound they may be coated by metal oxides or metal sulfides. When the flake products are coated this provides additional visual or functional effects.

The non-metal flake products obtainable by the process of the present invention can be used as a pigment; for an electrically conductive pigment; for electro magnetic interference (EMI) shielding; or for providing gas barrier and/or liquid barrier properties to a surface coating or food packaging.

### DETAILED DESCRIPTION

### PROCESS

As previously mentioned, the present invention provides a process of preparing flake products, the process comprising the steps of (i) printing a liquid non-metal flake precursor onto or into a collecting substrate; (ii) subjecting the non-metal flake precursor to a solidification treatment to provide non-metal flakes; and (iii) recovering the non-metal flakes. The term "flake products" as used herein is a generic term referring to the finished materials and encompassing non-metal flakes and non-metal flakes coated with metal and/or metal compounds. Optionally these flakes may have been milled. Thus the term "flake products" includes non-metal flakes, milled non-metal flakes, metal-coated non-metal flakes and metal-coated milled non-metal flakes.

The flake products obtainable from the process of the present invention typically have a median particle diameter of 1000µm or less, preferably 100µm or less, more preferably 50µm or less, more preferably 30µm or less, for instance 10 to 30µm, and even 10µm or less.

The term "non-metal flake" as used herein refers to a non-metal particle having an aspect ratio of at least 3:1 wherein the aspect ratio is defined as the ratio of the largest dimension to the smallest dimension. In one preferred aspect, the non-metal flakes have an aspect ratio of at least 5:1. According to a preferred aspect of the invention the non-metal flakes have a substantially circular face and the aspect ratio is then the ratio of the diameter of the circular face to the thickness.

### Printing

According to the present invention, the non-metal flake precursor may be printed by any suitable printing method. Suitable printing methods allow the printing of discrete shapes of sufficiently small quantities of the non-metal flake precursor that the resultant non-metal flakes have a median particle diameter of 1000µm or less, preferably 100µm or less. The printing method is preferably intaglio printing, relief printing such as flexography, or ink-jet printing. Other printing methods include lithography, such as offset lithography, and screen process printing.

In one preferred embodiment, the printing is intaglio printing. Intaglio printing is a technique involving engraving an "image" onto an image carrier. The image can be engraved by cutting or etching the image carrier, for example with a diamond-tipped or laser etching machine. The image carrier may be a copper or steel plate or cylinder. Ink is then rubbed into the indentations formed by the engraving. In conventional use, when the image carrier is a plate, it is passed through a press between a flat platform and a heavy roller. A piece of dampened paper is placed between the plate and the roller so that as the roller places the plate under pressure, the ink is squeezed out of the plate onto the paper.

According to the present invention, the non-metal flake precursor would replace the ink and the paper would be replaced by the collecting substrate. The engraved image is typically composed of small recessed cells, or 'dots' that act as tiny wells. Their depth and size may be varied to control the amount of non-metal flake precursor that is transferred to the collecting substrate and hence the size of the resultant non-metal flakes.

One form of intaglio printing is rotogravure printing, or gravure printing. The image carrier in gravure printing is a cylinder and a rotary printing press is utilised.

A rotogravure printing press for use in the present process would typically include an engraved cylinder, a reservoir of non-metal flake precursor, a doctor blade, an impression roller, and, optionally, a dryer. While the press is in operation, the engraved cylinder is partially immersed in the reservoir of precursor, filling the recessed cells. As the cylinder rotates, it draws precursor out of the reservoir with it. Acting as a squeegee, the doctor blade scrapes the cylinder before it makes contact with the collecting substrate, removing precursor from the non-printing (non-recessed) areas. Next, the collecting substrate gets sandwiched between the impression roller and the gravure cylinder. At this point, the precursor is transferred from the recessed cells onto the collecting substrate. The purpose of the impression roller is to apply force, pressing the collecting substrate onto the gravure cylinder, ensuring maximum application of the precursor. Unlike in conventional printing, the printed precursor does not absorb into or adhere strongly to the substrate. The collecting substrate may then go through a dryer to solidify the non-metal flake precursor into non-metal flakes. The non-metal flakes are subsequently removed from the collecting substrate.

In one aspect, the printing is relief printing, preferably flexography. Flexography is a printing process in which flexible printing plates made of rubber or a photopolymer are used to transfer ink directly to paper or another substrate. It is widely used in the packaging industry to print on cardboard box material or plastics. Flexographic printing typically uses alcoholic solvent-based inks of a viscosity of 0.1 pascal second (100 cPs) or more.

In another preferred embodiment, the printing is ink-jet printing.

Thus, in a further aspect, the present invention provides an ink-jet printing process comprising the steps of (i) ejecting a liquid non-metal flake precursor from a jet head; (ii) collecting droplets of the non-metal flake precursor in or on a collecting substrate; (iii) subjecting the droplets to a solidification treatment to provide non-metal flakes; and (iv) recovering the non-metal flakes.

According to yet another aspect, the present invention provides a process of preparing flake products, the process comprising the steps of (i) ejecting a liquid non-metal flake precursor from a jet head; (ii) collecting droplets of the non-metal flake precursor in or on, preferably on a collecting substrate; (iii) subjecting the droplets to a solidification treatment to provide non-metal flakes; and (iv) recovering the non-metal flakes.

The term "droplets of the non-metal flake precursor" refers to a quantity of the non-metal flake precursor that is not solid and is, in particular, sufficiently malleable to undergo physical deformation.

The jet head may be an ink jet printer head which has been modified to hold a liquid non-metal flake precursor in the reservoir in place of conventional ink. The mechanism by which the jet head delivers the droplets of the non-metal flake precursor is not critical, providing sufficiently small droplets can be generated at high speed and the materials of construction are unaffected by the chemical nature of the precursor in use. Ink jet printers of the continuous ink jet (CIJ) and drop-on-demand (DOD) types are especially amenable to the process of the invention.

In a further preferred embodiment, there is a differential motion between the jet head and the collecting substrate. This differential motion avoids the unintentional superimposition of the droplets of the non-metal flake precursor. In practice, the jet head is generally fixed, with the collecting substrate moving uniformly below it. In one embodiment the liquid non-metal flake precursor is ejected vertically downwards. In one preferred embodiment, the collecting substrate is or is on a continuous belt. The collecting substrate preferably moves horizontally below the jet head at a rate of 0.1 to 1.0 metres/sec, such as at least 0.2 metres/sec, or at least 0.3 metres/sec. In a preferred aspect the collecting substrate moves at a rate of about 0.45 metres/sec. As the ink jet printing technique develops, faster belt speeds can be contemplated.

In one embodiment the distance between the jet head and the collecting substrate is less than 0.25 metres, such as less than 0.10 metres or less than 0.05 metres. The distance is preferably less than 0.01 metres, such as less than 0.005 metres or less than 0.001 metres.

### Non-metal flake precursors

Examples of suitable non-metal flake precursors include precursors of glass flakes such as sol gels, low melt temperature glass or other ceramic compositions, organic silicates such as tetraethyl orthosilicate, inorganic silicates, such as alkali metal silicates and other film-forming inorganic compounds, solid and liquid resins and polymers, solutions such as resin or polymer solutions and precursors of synthetic bismuth oxychloride flakes, such as bismuth nitrate.

Preferably the non-metal flake precursor is a sol gel, a resin, a polymer liquid, a solution such as a resin or polymer solution, or bismuth nitrate solution. It is further preferred that the flake precursor is of good thermal and chemical stability.

The resin may advantageously be an electron beam or UV/IR curable resin, such as an acrylic resin, or a thermosetting resin, such as an epoxy resin or an air drying resin, for example a polysiloxane resin, of which the Silikophen products of Tego Chemie GmbH are examples. Examples of liquid thermoset phenolic resins are products of Tipco Industries Ltd, TPF/S/1517 and TPF/F/151. Examples of UV curable resins are acrylates, epoxy acrylates, urethane acrylates, polyester acrylates, polyether acrylates and other functional monomers and oligomers. As examples of UV curable resins, the Ebecryl products of UCB (Chem) Ltd, Laromer products of BASF AG or the Sarbox oligomers of the Sartomer Company Inc may be mentioned. Alternatively, the resin may be a solution of non-UV curable hard resins and/or polymers.

In one embodiment, the non-metal flake precursor comprises a fine dispersion of organic or inorganic colorants. This embodiment is particularly preferred when the flake product is to be used as a pigment, for example by dispersion in a pigment carrier. In this embodiment the flake products need not be coated since their colour can be controlled by selection of appropriate colorants. The organic or inorganic colorants may also be used as a means of controlling the brittleness of the flake products.

The size and spatial distribution of droplets of the non-metal flake precursor on the collecting substrate may be controlled by a variety of factors depending on the printing process being used. For example, when the printing process is intaglio printing, it can be controlled by the size and spatial distribution of the recessed wells on the image carrier. When the printing process is ink-jet printing, it can be controlled by the jet head drive electronics and the relative motions of the head and collecting substrate.

At small precursor droplet volumes, the definition of the ink jet printed image declines, because insufficient kinetic energy can be imparted to the droplets to cause them to reliably alight in the intended location. This is due to the tendency for such small droplets to be deflected by air currents. A key advantage of the instant process is that perfect spacing between droplets on the collecting substrate is not required. The spacing of the nozzles in the jet head and the relative motion of head and collecting substrate may be adjusted to avoid unintentional droplet overlap.

Droplet thickness and surface characteristics of the flake product may be controlled by adjusting the viscosity of the precursor droplet, where appropriate, the length of the droplet's flight path onto the substrate and the surface tension relationship between the precursor and substrate materials. For each type of printing process, e.g. ink-jet printing, the optimum operating conditions for a given combination of precursor and substrate may be determined by routine experimentation.

According to one embodiment the non-metal flake precursor has a viscosity of 0.1 pascal second (100 cPs) or less, such as 0.08 pascal second (80 cPs) or less, or 0.05 pascal second 50 cPs or less. Preferred viscosities for jetting are 0.002 - 0.02 pascal second (2 to 20 cPs). When more viscous liquids are used, the viscosity should be adjusted, for example by dilution, or heating where the precursor is heat tolerant. For example, a heated inkjet print head may be used, generally lowering the viscosity of the liquid to be jetted.

The additives suitable for the desired printing method may be added to the non-metal flake precursor to aid the printing process, for example to adjust the viscosity. For example, when ink-jet printing is adopted, additives such as wetting agents and humectants may be added.

### Collecting Substrate

The collecting substrate is typically a solid. Examples of suitable solid collecting substrates include polytetrafluoroethylene (PTFE), polyethylene, polypropylene, flexible polyester films, polyimide films such as Kapton® by Dupont, silicone rubber, metal, glass or ceramic surfaces and substrates having release layers, such as organic release layers. The metal, glass or ceramic surfaces may be optionally polished to enhance their release properties.

The non-metal flakes may be expected to adopt the surface contours of the substrate. Therefore, the collecting substrate preferably has a smooth surface and a low friction coefficient such that the droplets of the non-metal flake precursor do not adhere to it and/or may be readily removed from it. In this aspect PTFE and silicone rubber are particularly preferred substrates. Silicone rubber is particularly advantageous because it exhibits good wetting, low adhesion, which aids removal of the flakes, and an extremely flat surface, which produces a very smooth and hence highly reflective surface on the flakes. Flexible substrates are preferred because they can readily be used as a conveyer belt in a continuous process. Silicone rubber is therefore also advantageous for this reason. Rigid substrates may be incorporated in belts by configuring them as strips transverse to the belt direction of travel, that abut tightly at the point at which precursor droplets alight.

In a specific embodiment the collecting substrate and precursor liquid are selected such that the precursor liquid does not wet the substrate. A continuous patch of precursor liquid is printed onto the substrate and breaks up under surface tension to create small droplets of precursor liquid which may then be solidified to form flakes. The flakes tend to have convex surfaces on the side away from the substrate as a result of this method of formation, which when coated with metal afford tiny convex mirrors, or concave mirrors when viewed through the body of the flake if that is transparent, and offer unusual visual effects.

In another embodiment the collecting substrate may be or may have a release layer. The term "release layer" as used herein means a pre-applied release layer, designed to be subsequently dispersed or dissolved in a liquid, in order to release the non-metal flakes. The release layer is typically a resin or polymer deposited from solution or suspension in a volatile liquid that can be re-dispersed or re-dissolved in the same or another liquid. One suitable solid collecting substrate is paper, pre-coated by a release layer of dry Hi-Selon C-200 polyvinyl alcohol, (available from British Traders & Shippers Ltd.) deposited from aqueous solution. Another example is a solution of PVP (polyvinyl pyrrolidone) K15 that is coated onto Melinex film and allowed to dry. A release layer may be advantageously employed when conventional contact printing processes, such as gravure, are used.

In one preferred embodiment, the collecting substrate is thermally durable. An example of a thermally durable collecting substrate is a metal surface such as copper film or aluminium foil. Preferably a thermally durable substrate is utilised when the solidification treatment includes heating.

In one preferred embodiment, the substrate is or is on a continuous belt or roller. A continuous belt allows the non-metal flakes to be detached, either by mechanical action or by washing with a suitable recovery liquid downstream of the printing apparatus, such as the jet head. Indeed the entire process is well suited to continuous operation, with the resulting economies of production.

In one embodiment the printing apparatus, such as the jet head in ink-jet printing, and the collecting substrate are in a chamber under an inert atmosphere. This embodiment is particularly suitable when the non-metal flake precursor is chemically sensitive. In a further embodiment, the printing apparatus and the collecting substrate are in a chamber under at least a partial vacuum. When the printing apparatus is an ink-jet jet head, this embodiment is particularly advantageous because it may assist egress of the non-metal flake precursor from the jet nozzle.

In a further embodiment, the collecting substrate is a liquid. This may advantageously be utilised to collect droplets ejected by an ink-jet head, which are subjected to a solidification treatment prior to contact with the collecting substrate, or during or after contact with the collecting substrate.

### Milling

In one aspect, the process further comprises a milling step. Milling may take place at any stage in the process after the non-metal flake precursor has been printed onto the collecting substrate.

Thus, the non-metal flake precursor may first be subjected to a solidification treatment and then may be milled. This may take place either whilst still on the collecting substrate or following removal from the collecting substrate. If the non-metal flakes are coated, milling may take place either before or after coating. Whether the non-metal flakes can be successfully milled will, of course, depend on their brittleness. They should be sufficiently malleable to undergo physical deformation at the time of milling.

According to one embodiment, the non-metal flake precursor is milled after being printed onto the collecting substrate but before the solidification treatment. In this embodiment it is advantageous if the collecting substrate is or is on the moving rolls of a roll mill.

In one preferred embodiment, ink-jet printing is utilised and the droplets of the non-metal flake precursor are milled. As previously mentioned, the droplets of the non-metal flake precursor are sufficiently malleable to undergo physical deformation. In this embodiment it is advantageous if the collecting substrate is or is on the moving rolls of a roll mill.

The term "milling" as used herein includes any mechanical work performed so as to deform the flakes or precursor droplets, by moving milling media, for instance, by conventional ball milling or by roll milling, such as with a nip roll.

When droplets of non-metal flake precursor are produced by the printing step and particularly when ink-jet printing is used, the droplets may be allowed to impinge on the moving rollers of a two or three roll mill. The nip between the rollers is set to impart pressure on the droplets, flattening them further so that they assume the contours of the rollers, which may for example be used to impart a pattern on either or both of the flake surfaces. The surface quality of the non-metal flakes and hence the reflectivity of a pigment composition in which they are incorporated is dependent on the degree of surface polish of the rollers.

Incidentally, milling will of course change the particle size of the flakes and it may also affect the particle size distribution.

### Solidification Treatment

As previously mentioned, the non-metal flake precursor, for instance in the form of droplets produced by ink-jet printing, is subjected to a solidification treatment to provide non-metal flakes.

The solidification treatment may be any suitable physical or chemical means or a mixture of both. Examples of suitable physical means may include heating and cooling. Examples of suitable chemical means include chemical reactions resulting from UV curing, heating, treatment with steam, treatment with ammonia vapour, treatment with hydrogen chloride gas or a mixture thereof.

In particular, the solidification treatment may be a thermal, chemical or irradiative treatment or a combination thereof. Examples of suitable thermal treatments include heating and cooling, such as air-cooling. Examples of suitable chemical treatments include treatment with steam, treatment with ammonia vapour, treatment with hydrogen chloride gas or a mixture thereof. Examples of suitable irradiative treatments include the application of electromagnetic radiation or particle radiation such as ultraviolet (UV) and electron beam (EB) curing and laser curing. A further example of a solidification treatment is vacuum treatment.

The solidification treatment will depend on the nature of the non-metal flake precursor. For example, when the non-metal flake precursor is a UV or IR curable resin, UV or IR curing may advantageously be used as the solidification treatment. UV or IR lamps may be used to carry out the solidification treatment. When the non-metal flake precursor is tetraethyl orthosilicate, the solidification treatment may be treatment with an atmosphere of steam and ammonia vapour to fuse the tetraethyl orthosilicate to silica and optionally subsequent heat treatment to form glass. If bismuth nitrate is used as the non-metal flake precursor, the droplets may be heated to around 400°C and treated with a mixture of hydrogen chloride gas and air.

Preferably a thermally durable collecting substrate is utilised when the solidification treatment includes heating.

### Recovery

In one embodiment the non-metal flakes are recovered from the collecting substrate, particularly a solid collecting substrate, by mechanical means. Suitable mechanical means include using ultrasonics or a scraping device such as a doctor blade.

In another embodiment the non-metal flakes are recovered from the collecting substrate, particularly a solid collecting substrate, by means of a jet of liquid or air at elevated pressure. In a preferred embodiment the non-metal flakes are recovered by means of high-pressure water jets, which are particularly suitable for use in a continuous process.

In another embodiment the non-metal flakes are recovered from the collecting substrate, particularly a solid collecting substrate, by washing with a recovery liquid.

Providing it does not react undesirably with the non-metal flakes, water or any common organic compound finding use as a solvent may be employed as a recovery liquid. In one preferred embodiment the recovery liquid is water.

A thin layer of recovery liquid may be passed across the surface of a solid collecting substrate, which may itself be mobile or static. In this way, non-metal flakes are formed directly on the liquid's surface, for easy collection.

Alternatively, when the collecting substrate is a release layer, the release layer may be dispersed or dissolved in a recovery liquid. It may be advantageous to use as a release layer a material that contributes to the final application; for example a resin that in a derived surface coating becomes a permanent, film-forming part of that coating. It may be advantageous to use a recovery liquid that contributes to the final application, for instance by fulfilling a further useful role in post-treating or facilitating post-treatment of the particulates. The recovery liquid might be selected for its chemical reaction with the particulate. These two aspects may be combined so that both the recovery liquid and release layer contribute to the final application.

In one broad aspect, in place of a solid collecting substrate, a liquid may be used alone as a collecting substrate. In such instances, the collecting substrate is preferably a liquid with a higher viscosity than the viscosity of the droplet of the non-metal flake precursor when it impinges on the collecting substrate. A liquid with such a viscosity is likely to confer more satisfactory surface properties on the flake or other product.

The liquid collecting substrate may in one embodiment be a liquid such as described above for use as a recovery liquid. An advantage of using a recovery liquid is the ability to treat the non-metal flakes whilst in the recovery liquid. This may be for a variety of purposes.

In one aspect the non-metal flakes in the recovery liquid may be in a form convenient for sale or for further processing. This may be achieved by using a recovery liquid that is compatible with the envisaged application. For certain applications, it may be necessary to concentrate the non-metal flakes in the recovery liquid, for example to form a conventional flake paste for ease of handling. Where this is the case, a filter press or other known well-known means of separating solid particulates from liquids may be used.

Use of a recovery liquid has the advantage of removing the problem of dust contamination of the workplace.

To render the flake products of the process of the invention compatible with plastics and certain printing inks, it is necessary to avoid high boiling recovery liquids, either by dry recovery of the optionally coated non-metal flakes or through their conversion into a liquid free form, such as granules, using for example the process described in European Patent 0134676B. If desired, the non-metal flakes may be immobilised by solid organic carrier material.

### Coating

In one aspect, the process of the present invention further comprises the step of coating the non-metal flakes with metal and/or a metal compound. Preferred metal compounds for use in the present invention are metal oxides and metal sulfides

In one preferred aspect the non-metal flakes are coated with metal.

Preferably the metal is aluminium, zinc, copper, tin, nickel, silver, gold, iron or an alloy thereof. More preferably the metal is aluminium, zinc, copper, tin, nickel, silver, gold or an alloy thereof. In one preferred aspect, the metal is aluminium or brass.

In one aspect the metal is an alloy comprising two or more of aluminium, zinc, copper, tin, nickel, silver, gold and/or iron.

In another preferred aspect, the non-metal flakes are coated with a metal compound.

Preferably the metal compound is a metal oxide. In a more preferred aspect, the metal compound is a metal oxide selected from oxides of aluminium, zinc, copper, tin, nickel, silver, iron, titanium, manganese, molybdenum and silicon.

In another preferred aspect, the metal compound is a sulfide, such as cerium sulfide, cadmium sulfide, or chromium sulfide. Further metal compounds which might be used are inorganic phosphates and chromates which may act as passivators. In one preferred aspect the metal compound is a mixture of copper and zinc compounds.

It is possible to undertake coating at any stage of the process provided this is compatible with the other steps adopted. It would, for instance, be possible to coat the non-metal flakes before or after their removal from the collecting substrate. If it is desirable for both sides of the final flake products to be coated, then coating the flakes after removal from the substrate is generally preferred. However, if only one side of each final flake product is to be coated, and this is often sufficient for the desired metallic appearance of the pigment flakes, then coating prior to removal from the substrate is feasible. Coating only one side of the flake product is particularly applicable when the flakes are optically transparent and is advantageous because a smaller quantity of the metal and/or metal compound is required, which leads to economic benefits.

Thus, in one aspect, the present invention provides a process of preparing flake products, the process comprising the steps of (i) printing a liquid non-metal flake precursor onto a collecting substrate; (ii) subjecting the non-metal flake precursor to a solidification treatment to provide non-metal flakes; (iii) recovering the non-metal flakes and (iv) coating the non-metal flakes with metal and/or a metal compound.

In another aspect, the present invention provides a process of preparing flake products, the process comprising the steps of (i) printing a liquid non-metal flake precursor onto a collecting substrate; (ii) subjecting the non-metal flake precursor to a solidification treatment to provide non-metal flakes; (iii) coating the non-metal flakes with metal and/or a metal compound; and (iv) recovering the coated non-metal flakes.

It will be readily understood that the term "coated (non-metal) flakes" as used herein refers to flakes that have been coated with metal and/or a metal compound. Coated flakes may be fully coated, i.e. may have a coating of metal and/or metal compound over the entire surface of the non-metal flake, or may be partially coated, for example having a coating on only a portion of the surface of the non-metal flake. A partially coated flake could be formed by carrying out the coating step prior to removal of the flake from the collecting substrate.

The non-metal flakes are preferably able to resist temperatures of up to 350°C at the coating stage as this ensures thermal stability in all likely applications of the products of the invention.

If the flakes are milled, the coating may be applied before or after milling.

As previously mentioned one advantage of using a recovery liquid is the ability to treat the non-metal flakes whilst in the recovery liquid. For example, the non-metal flakes may be coated with metal and/or metal compounds by well-known wet chemistry techniques whilst still in the recovery liquid.

Alternatively, the non-metal flakes may be recovered dry and coated with metal and/or metal compounds by well-known vacuum deposition techniques, for example in a fluidised bed. Alternatively, before removal from the collecting substrate, metal and/or metal compounds may be deposited under high vacuum by vaporisation of the source compound. Such treatment may advantageously be carried out in vacuum deposition equipment manufactured by General Vacuum Equipment Ltd.

Digital metal deposition technology may also be used to coat the non-metal flakes. One known process involves jetting a silver, nano-particulate ink onto a material (in this case, the flakes) followed by high temperature sintering to fuse the particles.

Another coating technique involves the use of a special non-metal flake precursor that can be processed to form a semi-porous "sponge" into which the metal and/or metal compound is deposited. The flakes are formed from a flake precursor that has three components: a watersoluble UV curable component, a water insoluble UV curable component and a transition metal catalyst. On curing, the two UV curable components separate into discrete phases. The water soluble phase may be dissolved out to leave a semi-porous sponge into which the metal and/or metal compound may be deposited by electroless deposition, for example, in an electroless copper bath. This technique is described in WO-A-04068389.

The non-metal flakes may be activated prior to the coating step to make the surface more receptive to the coating. Activation may consist of an acidic SnCl₂ treatment that could be achieved using a bath process. Catalytically active surface may then be created in a subsequent step that consists of treatment with Pd²⁺ solution, usually performed using a bath process. Surface preparation/activation steps are usually followed with rinsing steps that can be performed using low-pressure water jets.

In one preferred embodiment, the coating is carried out using an electroless bath. In this aspect, copper electroless baths and nickel electroless baths, which are widely commercially available, eg metal plating systems from Rohm & Haas and Technic Inc, are particularly suitable. Once an electrically conducting flake coating is in place further metal coatings can be achieved by electrolytic metal deposition.

The non-metal flakes may be coated with more than one layer of metal and/or metal compound. The coating material used in each layer is independently selected from metals and metal compounds such that the layers may be of the same metal or metal compound or a combination of different metals and/or metal compounds. Coatings on one side of the non-metal flake can be formed by superimposing ink jet droplets. The ability to accurately deposit one droplet directly on top of another with a high degree of technical sophistication is afforded by the ink jet printing process. In general, solidification can be effected before or after collection of droplets, and overprinting can take place before or after solidification. The thickness and refractive index of each coating layer may also vary. Properties, such as optical properties, of the flake products may be adjusted by varying the number of layers of coating, the coating material used in each layer and/or the thickness of each layer. Thus different colour effects may be achieved, including colour variable effect pigments, displaying chromatic colour variation with the angle of viewing.

In a preferred aspect, the overprinting process described above is effected by an ink jet printing process comprising the steps of (i) ejecting a liquid non-metal flake precursor from a jet head; (ii) collecting droplets of the non-metal flake precursor on a collecting substrate; (iii) ejecting a second different liquid from a jet head to overprint the collected droplets so as to form composite flakes; and (iv) recovering the composite flakes.

The coated flakes may be passivated during their preparation by treatment with corrosion inhibiting agents, for example by the addition of one or more corrosion inhibiting agents to a recovery liquid containing the coated flakes. This may be particularly desirable when the flakes are coated with a metal such as aluminium, zinc, copper, silver, or iron.

Any compounds capable of inhibiting the reaction of the metal and/or metal compound with water may be employed as corrosion inhibitors. Examples are phosphorus-, chromium-, vanadium-, titanium- or silicon-containing compounds. They may be used individually or in admixture.

Certain metal- and/or metal compound-coated non-metal flakes may be treated with ammonium dichromate, silica or alumina to improve stability in aqueous application media. Other treatments, with agents such as ammonium or potassium permanganate, may be used to provide coloration of the flake surface, for example to simulate gold. Still further treatments may improve the hardness and therefore the shear resistance of such flakes in application media.

### FLAKE PRODUCTS

The process of the present invention may advantageously be used to prepare flake products having a low median particle diameter and/or a narrow particle size distribution preferably having a low median particle diameter and a narrow particle size distribution.

Methods traditionally used to separate wanted from unwanted particle size fractions, such as dilution with solvent, followed by wet screening, are not generally required. Further, the process of the invention essentially produces flake products having a uniform median particle diameter.

The physical form of the flake products obtained from the instant process is good and they will usually be suitable for use without further processing. For maximum brightness in pigmentary applications however, it may be advantageous to gently mill or polish the surfaces of the flake products, where the flake product is amenable, to increase surface reflectance, for example to improve reflection of light.

Preferably the flake products are coated with a metal or a metal compound. In another preferred embodiment, the flake products have a particle size distribution such that at least 95% by weight of the flake products have a particle diameter within ±25% of the median particle diameter such as within ±10%, or within ±5%, or even within ±3%. In another preferred embodiment, the flake products having a median particle diameter of 100 µm or less, preferably 50 µm or less, preferably 30 µm or less and a particle size distribution such that at least 90% by weight of the flake products, preferably at least 95% by weight, have a particle diameter within ±25% of the median particle diameter, preferably within ±5% of the median particle diameter.

The flake products are optionally coated, non-metal flakes, preferably coated, non-metal flakes.

The term "median particle diameter" as used herein refers to a weight median particle diameter. When the flake product has a substantially circular face, the particle diameter is the diameter of the circular face. Otherwise the particle diameter is the longest dimension of the flake product.

Particle size distributions may be measured with a "Malvern Master Sizer 2000" which is a standard instrument for measuring weight or volume percent particle size distributions. It will be readily appreciated that for particles of uniform density the volume percent particle size distribution will be equivalent to the weight percent particle size distribution. Thus in many cases references to weight median particle diameter and volume median particle diameter are interchangeable.

Preferably the median particle diameter of the flake products is from 5 to 1000 µm, such as from 5 to 500 µm, 5 to 250 µm, 5 to 150 µm, 5 to 100 µm, 5 to 50 µm or 5 to 30 µm.

Preferably the median particle diameter of the flake products is from 10 to 500 µm, such as from 10 to 250 µm, 10 to 100 µm, 10 to 50 µm or 10 to 30 µm.

In another aspect, the median particle diameter of the flake products is preferably from 80 to 1000 µm, such as from 80 to 500 µm, 80 to 250 µm, 80 to 150 µm or 80 to 100 µm.

In one aspect the median particle diameter is 100 µm or less, such as 50 µm or less, 30 µm or less, 20 µm or less, 10 µm or less or 5 µm or less.

As previously mentioned, the term "flake" refers to a particle having an aspect ratio of at least 3:1. Preferably the aspect ratio of the flake products is at least 5:1, more preferably at least 15:1. Higher aspect ratios are generally preferable and flake products having an aspect ratio of 100:1, such as 150:1 or above, or 250:1 or above are contemplated.

In one aspect the non-metal flakes have a substantially circular face. In this aspect the non-metal flake precursor is preferably collected on the collecting substrate as a series of closely spaced droplets.

The non-metal flakes may be different shapes depending on the intended application. For example the non-metal flakes may have a substantially triangular, square, or rectangular face or may be in the form of rods, bars or fibres. In fact the flakes may have a face that is any shape that can be produced by the particular printing process in use, although the flakes will typically have a uniform thickness. The non-metal flakes may not be perfectly flat but may instead have a convex/concave face. For certain applications, in particular non-pigmentary applications, such as electrical conductivity, the flakes may advantageously be in the form of tubes or filaments.

When ink-jet printing is used, non-metal flakes having a substantially circular face may be obtained from single droplets whereas other shapes are obtained by modifying the ink jet nozzle design or directing two or more droplets onto the collecting substrate such that the second and subsequent droplets impinge partially on earlier droplets and fuse therewith.

The non-metal flakes may be used in place of existing pearlescent pigments. In this aspect the optionally milled non-metal flakes are the flake products. In a specific embodiment, the flake products may be used as an alternative to glass flake pigments for surface coatings and the mass pigmentation of polymers. The non-metal flakes may also have functional properties and may, for example impart anti-corrosive properties.

Alternatively the non-metal flakes may be coated with metal and/or a metal compound and then used to provide economical replacements for commercially available metal flake pigments. In this aspect the optionally milled metal- and/or metal compound-coated non-metal flakes are the flake products.

Coated non-metal flakes have a number of advantages over conventional metal flakes. For example, the non-metal material may be a relatively low cost material leading to a reduction in production costs. The coated non-metal flakes will also typically have significantly lower density than metal flakes with the result that they have much less tendency to settle in fluid application systems such as inks and paints. Furthermore, being of significantly narrower particle size distribution than conventionally flakes, their metallic brightness is enhanced.

### PIGMENT COMPOSITION

The process of the present invention can be used in the production of a pigment composition comprising the flake products described above.

Thus, the process of the present invention can be used in the production of a pigment composition comprising flake products having a median particle diameter of 100 µm or less and a particle size distribution such that at least 90% by weight of the flake products have a particle diameter within ±25% of the median particle diameter, such as within ±10%, or within ±5%, or within ±3%.

The pigment compositions comprise flake products and a pigment carrier.

### SURFACE COATING

The pigment composition or the flake products as defined above can be used in the production of a surface coating comprising said flake products or pigment composition. The pigment composition may be added to surface coating binders dissolved or dispersed in water, solvent or mixtures of the two, to prepare a surface coating, such as an ink or paint.

The reaction of certain coated flakes in the surface coating, notably aluminium-coated flakes, may however be unpredictable. Where such a surface coating contains a proportion of water, there exists the possibility that reactions may occur during storage, with the formation of hydrogen gas and attendant hazards. It is therefore desirable to passivate such metal-and/or metal compound- coated flakes in the manner described above.

### USE

The flake products obtainable by the process of the invention may have functional and/or aesthetic applications. In one aspect, they may be used as a pigment, for instance in surface coatings or in the mass pigmentation of polymers. Flake products of good thermal stability are required for the latter.

Non-pigmentary applications of the flake products include flake products for electrically conductive applications, such as EMI shielding, as well as coatings providing a barrier to migration of gases and liquids, useful in food packaging. EMI shielding refers to the use of a material (the EMI shielding agent) to block spurious electromagnetic radiation that may interfere with the efficient operation of electrical equipment. A typical example is the use of nickel flakes in coatings applied to the insides of mobile phone and computer housings.

Accordingly the flake products obtainable by the process of the invention as herein defined may be used for EMI shielding or for providing gas barrier and/or liquid barrier properties to a surface coating or food packaging.

The invention is further illustrated by the following Examples in which all parts and percentages are by weight, unless otherwise stated.

### EXAMPLES

### EXAMPLE 1

TES 40, a derivative of tetraethyl orthosilicate (Wacker Chemicals) is filtered through a 3.1µm Nylon filter and introduced into the reservoir of a XJ126-200 ink jet head (Xaar Inc.), having 126 nozzles. The TES droplets fall 2mm onto flat polished glass. The glass moves horizontally below the print head at approximately 0.3 metres/sec. The drop generation rate is up to 5kHz per nozzle or 630,000 drops per second and the nozzle pitch 137µm. The droplets are thereafter subjected to an atmosphere of steam and ammonia vapour, to fuse the tetraethyl orthosilicate derivative to silica. These silica flakes are removed, optionally continuously, from the glass substrate by washing with water. The thus collected flakes are concentrated by filtration to give a paste having a solids content of 80% by weight.

For increased durability, the flake particles may be formed by printing onto a thermally durable substrate, such as a polished copper film, to allow the silica to be fused to form glass at a temperature in excess of 1,000°C. Removal from the film may then be achieved by mechanical action, optionally under liquid, with or without the input of ultrasonic energy. A solvent-based paint prepared from the flakes demonstrates excellent barrier properties in a bridge coating.

This flake may also be metal coated or coated with a metal compound by well-known vacuum deposition or electroless plating processes, to simulate 100% metal flakes.

### EXAMPLE 2

A black UV curing composition (based on a Uvispeed system, Sericol Ltd.) is filtered through a 3.1µm Nylon filter, printed by a XJ126-300 ink jet head (Xaar Inc.) having 126 nozzles, onto a release layer of dry Hi Selon C200 polyvinyl alcohol (British Traders & Shippers Ltd.) deposited onto paper from aqueous solution. It is thereafter passed through a LC062T3 UV curing apparatus (American UV Company Inc.) at a rate of 3m/min and a power of 300 watts/inch. The uniform black flakes of approximately 75µm particle diameter are separated from the release layer by washing with water and thereafter recovered by filtration. An unusual and attractive visuals effect may be produced by the incorporation of the flakes in a translucent white coating system.

### EXAMPLE 3

A 2% solution of bismuth nitrate in distilled water, acidified with nitric acid, is filtered through a 5µm ceramic filter and printed onto polished aluminium foil using the print head of Example 1. The printed droplets are then subjected to a temperature gradient of between room temperature and 400°C in a furnace through which is passed a mixture of hydrogen chloride gas and air. Acidic reaction of the bismuth nitrate forms the synthetic pearlescent pigment bismuth oxychloride in each droplet, and the dried particles emerging from the process are mechanically removed from the foil under hydrocarbon solvent and collected and concentrated in a Buchner filter. The thus formed lamellar flakes provide a white, pearlescent effect when formulated as an industrial paint.

### EXAMPLE 4

A solution of sodium silicate in water at a concentration equivalent to 20 g dm⁻³ of silica, adjusted to a pH of 11 by the addition of 25% aqueous ammonia solution, is filtered through a 5µm ceramic filter and printed onto polished glass using the print head of Example 1. The printed droplets are subjected to a temperature gradient between room temperature and 200 °C in a tube furnace through which hydrogen chloride vapour is passed. Acidification of the sodium silicate solution results in the precipitation of silica within each droplet, followed by progressive water removal. The resulting solid particles are removed from the polished glass substrate with water and collected by filtration.

Coating by metal may be performed on this material, as described in Example 1.

### EXAMPLE 5

The following mixture is added, with filtration, to a Microfab inkjet print head with an 80µm nozzle:

| | |
|---|---|
| Isopropanol | 45.2 parts by weight |
| Tetraethyl silicate | 3.2 parts by weight |
| 40.4 weight % copper (II) nitrate solution | 26.5 parts by weight |

and droplets printed on to a PTFE release layer. Using the same Microfab printhead, 25% ammonia solution is used to overprint the drops first formed. Addition of this basic catalyst causes the formation of solid blue particles.

### EXAMPLE 6

Droplets of the mixture of isopropanol, tetraethyl silicate and copper (II) nitrate solution are formed with the Microfab inkjet print head as in Example 5. The droplets formed are exposed to ammonia and water vapour from a solution of 25% ammonia. Blue, solid disc-like particles are formed.

### EXAMPLE 7

An epoxy-acrylate UV curable ink jet ink based on Ebecryl acrylate monomer (UCB Ltd.) of viscosity 7cPs is loaded into a XaarJet 128 print head and jetted onto a PTFE collecting substrate moving at 1 metre/sec with respect to the ink jet head. After UV curing under a Fusion LightHammer 6 lamp fitted with an H-bulb, the resultant 70µm (+/- 8µm) cured droplets are removed from the release sheet by sonication in water or acetone. The flakes so formed are optionally nickel, then tin plated from aqueous solution, thereby providing a 140nm silver coloured coating on all flake surfaces. Alternatively, the nickel/tin coating may be deposited on the upper face and sides of each flake before detaching from the PTFE substrate.

### EXAMPLE 8

A methylphenyl polysiloxane polymer solution (Silicophen 300) is let down 3:1 with xylene to a viscosity of approx. 8cPs and jetted onto a PTFE collecting substrate at a wet film thickness of 50µm. The droplets are cured at 230°C for 40 minutes. Solid, 60µm diameter, flake-shaped droplets are thereafter removed from the collecting substrate by sonication in water or acetone. This product is found to have extremely high thermal stability, in excess of 350°C. As a consequence, a metallised version of this product is suitable for incorporation in plastics.

### EXAMPLE 9

A XaarJet 500 180dpi print head is used to jet a 50% solids UV curable catalyst (CIT Ltd.) onto a PTFE release layer and then cured using a Fusion LH6 lamp fitted with an H-bulb. A solid block is printed at 180x180 dpi, which gives individual droplets due to de-wetting of the ink on the PTFE substrate. These cured droplets are then metallised using standard copper metallisation conditions. No de-lamination from the release sheet is observed during this process. Finally, the metallised droplets are removed by sonication in acetone. As the flakes are metallised while adhered to the PTFE release layer, they are reflective only on one side. Also, the non-wetting nature of the substrate results in a curved upper surface to the droplets.

### EXAMPLE 10

The UV curing composition of Example 7 is jetted onto a smooth silicon substrate using a XaarJet 500 180dpi print head, then cured by a LightHammer 6 UV lamp. The resulting cured droplets demonstrate significantly lower curvature in comparison to the flakes observed from the PTFE release layer of Example 7. After removal from the silicon substrate using brief sonication, the droplets are metallised to give flakes that are fully copper coated. Alternatively, the discs may be copper coated, then fully tin coated to give flakes of bright silver appearance, particularly suitable for use in coatings.

**Table 1**

| **Typical aluminium pigment** | | | |
|---|---|---|---|
| | | | |
| **D(10) (µm)** | 3.35 | | |
| **D(50) (µm)** | 10.11 | | |
| **D(90) (µm)** | 21.90 | | |
| | | | |

| **size (µm)** | **weight % under** | **size (µm)** | **weight % under** |
|---|---|---|---|
| 0 | 0.00 | 16 | 76.00 |
| 1 | 0.50 | 18 | 81.86 |
| 2 | 3.85 | 20 | 86.55 |
| 3 | 8.31 | 22 | 90.06 |
| 4 | 13.42 | 24 | 92.76 |
| 5 | 19.10 | 26 | 94.89 |
| 6 | 25.17 | 28 | 96.53 |
| 7 | 31.39 | 30 | 97.60 |
| 8 | 37.58 | 34 | 99.04 |
| 9 | 43.61 | 38 | 99.70 |
| 10 | 49.38 | 42 | 99.93 |
| 12 | 59.76 | 46 | 99.99 |
| 14 | 68.69 | 50 | 100.00 |

**Table 2**

| **Typical pearlescent pigment** | | | |
|---|---|---|---|
| | | | |
| **D(10) (µm)** | 4.79 | | |
| **D(50) (µm)** | 9.80 | | |
| **D(90) (µm)** | 18.00 | | |
| | | | |

| **size (µm)** | **weight % under** | **size (µm)** | **weight % under** |
|---|---|---|---|
| 0 | 0.00 | 16 | 84.21 |
| 1 | 0.25 | 18 | 89.94 |
| 2 | 1.58 | 20 | 93.99 |
| 3 | 2.92 | 22 | 96.51 |
| 4 | 5.95 | 24 | 98.16 |
| 5 | 11.29 | 26 | 99.25 |
| 6 | 18.49 | 28 | 99.88 |
| 7 | 26.65 | 30 | 99.98 |
| 8 | 35.18 | 34 | 100.00 |
| 9 | 43.59 | 38 | 100.00 |
| 10 | 51.55 | 42 | 100.00 |
| 12 | 65.23 | 46 | 100.00 |
| 14 | 76.15 | 50 | 100.00 |

## Claims

1. A process of preparing flake products, the process comprising the steps of:
(i) printing a liquid non-metal flake precursor onto or into a collecting substrate;
(ii) subjecting the non-metal flake precursor to a solidification treatment to provide non-metal flakes; and
(iii) recovering the non-metal flakes.

2. A process according to claim 1, wherein the printing is intaglio printing, relief printing or ink-jet printing.

3. A process according to claim 1 or claim 2, comprising the steps of
(i) ejecting a liquid non-metal flake precursor from a jet head;
(ii) collecting droplets of the non-metal flake precursor on a collecting substrate;
(iii) ejecting a second different liquid from a jet head to overprint the collected droplets so as to form composite flakes; and
(iv) recovering the composite flakes.

4. A process according to any one of claims 1 to 3 wherein the non-metal flake precursor is a sol gel, a resin, a polymer, a resin or polymer solution or a precursor of bismuth oxychloride.

5. A process according to claim 4, wherein the precursor of bismuth oxychloride is bismuth nitrate.

6. A process according to any one of the preceding claims which further comprises a milling step.

7. A process according to any one of the preceding claims wherein the solidification treatment is cooling, heating, irradiative treatment, treatment with steam, treatment with ammonia vapour, treatment with hydrogen chloride gas or a combination thereof, or vacuum treatment.

8. A process according to claim 7 wherein the irradiation is by UV.

9. A process according to any one of the preceding claims, wherein the non-metal flakes are recovered from the collecting substrate by washing with a recovery liquid.

10. A process according to any one of the preceding claims, wherein the non-metal flakes are recovered from the collecting substrate by sonication.

11. A process according to any one of the preceding claims further comprising the step of coating the non-metal flakes with metal and/or a metal compound.

## Patentansprüche

1. Verfahren zur Herstellung von Flocken-Produkten, wobei das Verfahren die Schritte umfasst:
(i) Drucken eines flüssigen Nichtmetallflocke-Vorläufers auf oder in ein sammelndes Substrat;
(ii) Unterwerfen des Nichtmetallflocke-Vorläufers einer Verfestigungsbehandlung, um Nichtmetallflocken bereitzustellen; und
(iii) Rückgewinnen der Nichtmetallflocken.

2. Verfahren nach Anspruch 1, wobei das Drucken Tiefdruck, Prägedruck oder Tintenstrahldruck ist.

3. Verfahren nach Anspruch 1 oder Anspruch 2, umfassend die Schritte:
(i) Ausstoßen eines flüssigen Nichtmetallflocke-Vorläufers aus einem Strahlkopf;
(ii) Sammeln von Tröpfchen des Nichtmetallflocke-Vorläufers auf einem sammelnden Substrat;
(iii) Ausstoßen einer zweiten anderen Flüssigkeit aus einem Strahlkopf zum Überdrucken der gesammelten Tröpfchen, um Verbundflocken zu bilden; und
(iv) Rückgewinnen der Verbundflocken.

4. Verfahren nach einem der Ansprüche 1 bis 3, wobei der Nichtmetallflocke-Vorläufer ein Sol-Gel, ein Harz, ein Polymer, eine Harz- oder Polymerlösung oder ein Vorläufer von Bismutoxychlorid ist.

5. Verfahren nach Anspruch 4, wobei der Vorläufer von Bismutoxychlorid Bismutnitrat ist.

6. Verfahren nach einem der vorangehenden Ansprüche, umfassend ferner einen Mahlschritt.

7. Verfahren nach einem der vorangehenden Ansprüche, wobei die Verfestigungsbehandlung Kühlen, Heizen, Bestrahlen, Behandlung mit Dampf, Behandlung mit Ammoniak-Dampf, Behandlung mit Chlorwasserstoffgas oder eine Kombination davon, oder Vakuumbehandlung ist.

8. Verfahren nach Anspruch 7, wobei das Bestrahlen durch UV erfolgt.

9. Verfahren nach einem der vorangehenden Ansprüche, wobei die Nichtmetallflocken aus dem sammelnden Substrat durch Waschen mit einer Rückgewinnungsflüssigkeit rückgewonnen werden.

10. Verfahren nach einem der vorangehenden Ansprüche, wobei die Nichtmetallflocken aus dem sammelnden Substrat durch Ultraschallbehandlung rückgewonnen werden.

11. Verfahren nach einem der vorangehenden Ansprüche, umfassend ferner den Schritt von Beschichtung der Nichtmetallflocken mit Metall und/oder einer Metallverbindung.

12. Verfahren nach einem der Ansprüche 1 bis 11, umfassend ferner Verarbeitung der Flocke-Produkte in eine Pigmentzusammensetzung, wobei die Zusammensetzung Flocke-Produkte und einen Pigmentträger umfasst.

13. Verfahren nach einem der Ansprüche 1 bis 12, umfassend ferner Verarbeitung der Flocke-Produkte oder Pigmentzusammensetzung in eine Oberflächenbeschichtung, wie beispielsweise eine Tinte oder Farbe.

14. Verfahren nach einem der Ansprüche 1 bis 12, umfassend ferner die Massepigmentierung eines Polymers mit den Flocke-Produkten oder Pigmentzusammensetzung.

## Revendications

1. Procédé de préparation de produits en flocons, le procédé comprenant les étapes consistant à :
(i) imprimer un précurseur de flocons non métalliques liquide sur ou dans un substrat collecteur ;
(ii) soumettre le précurseur de flocons non métalliques à un traitement de solidification pour former des flocons non métalliques ; et
(iii) récupérer les flocons non métalliques.

2. Procédé selon la revendication 1, dans lequel l'impression est une impression en creux, une impression en relief ou une impression à jet d'encre.

3. Procédé selon la revendication 1 ou la revendication 2, comprenant les étapes consistant à :
(i) éjecter un précurseur de flocons non métalliques liquide d'une tête d'éjection ;
(ii) collecter des gouttelettes du précurseur de flocons non métalliques sur un substrat collecteur ;
(iii) éjecter un second liquide différent d'une tête d'éjection pour surimprimer les gouttelettes collectées de façon à former des flocons composites ; et
(iv) récupérer les flocons composites.

4. Procédé selon l'une quelconque des revendications 1 à 3, dans lequel le précurseur de flocons non métalliques est un sol-gel, une résine, un polymère, une solution de résine ou de polymère ou de précurseur d'oxychlorure de bismuth.

5. Procédé selon la revendication 4, dans lequel le précurseur d'oxychlorure de bismuth est le nitrate de bismuth.

6. Procédé selon l'une quelconque des revendications précédentes, qui comprend en outre une étape de toupillage.

7. Procédé selon l'une quelconque des revendications précédentes, dans lequel le traitement de solidification est un refroidissement, un chauffage, un traitement d'irradiation, un traitement avec de la vapeur d'eau, un traitement avec de la vapeur d'ammoniac, un traitement avec du chlorure d'hydrogène gazeux ou l'une de leurs combinaisons, ou un traitement sous vide.

8. Procédé selon la revendication 7, dans lequel l'irradiation se fait par UV.

9. Procédé selon l'une quelconque des revendications précédentes, dans lequel les flocons non métalliques sont récupérés du substrat collecteur par lavage avec un liquide de récupération.

10. Procédé selon l'une quelconque des revendications précédentes, dans lequel les flocons non métalliques sont récupérés du substrat collecteur par sonication.

11. Procédé selon l'une quelconque des revendications précédentes, comprenant en outre l'étape de revêtement des flocons non métalliques avec un métal et/ou un composé de métal.

12. Procédé selon l'une quelconque des revendications 1 à 11, qui comprend en outre le traitement des produits en flocons dans une composition de pigment, laquelle composition comprend des produits en flocons et un vecteur de pigment.

13. Procédé selon l'une quelconque des revendications 1 à 12, qui comprend en outre le traitement des produits en flocons ou d'une composition de pigment dans un revêtement de surface, tel qu'une encre ou une peinture.

14. Procédé selon l'une quelconque des revendications 1 à 12, qui comprend en outre la pigmentation en masse d'un polymère avec les produits en flocons ou la composition de pigment.
